# EUROPEAN PATENT APPLICATION

(11) **EP 3 349 170 A1**
(43) Date of publication of application: **18.07.2018**
(21) Application number: 16844540.1
(22) Date of filing: 23.03.2016
(51) Int. Cl.: G06Q 40/02, G08B 21/18

(54) **NOTIFICATION SERVICE PROCESSING APPARATUS ON BASIS OF INTERNET MESSAGE TRANSMISSION AND OPERATION METHOD THEREFOR**

(30) Priority: 11.09.2015 KR 20150128729
(71) Applicant: Enigma Co., Ltd., Anyang-si, Gyeonggi-do 14067 (KR)
(72) Inventor: LIM, Hyunjin, Seoul 08570 (KR)
(74) Representative: dompatent von Kreisler Selting Werner - Partnerschaft von Patent- und Rechtsanwälten mbB
(86) International application number: PCT/KR2016/002945
(87) International publication number: WO 2017/043720

(57) **Abstract**

Disclosed are an Internet-message-based notification service providing apparatus and an operating method thereof. The present invention may provide an apparatus and method capable of providing a notification message service for preventing financial fraud, to a user free of charge by using a currently widely used Internet-based message service. The present invention may also provide a technology capable of successfully providing a notification message to a user by re-sending the notification message in the form of a mobile text message if the user does not read the notification message sent to the user by using an Internet-based message service.

## Description

### TECHNICAL FIELD

The present invention relates to technologies for providing a notification message service used to prevent financial fraud or the like.

### BACKGROUND ART

Currently, as the amount of financial fraud such as voice phishing increases, research is being actively conducted on a system capable of preventing financial fraud.

In this regard, for example, the system capable of preventing financial fraud may send a payment notification message to a registered mobile device of a user in real time when the user makes a payment with a credit card, or send a transfer notification message to the registered mobile device of the user when the user makes an account transfer.

Using this notification message service, since information about a financial transaction is instantaneously provided to the user in the form of a text message, even when credit card or account information of the user is exposed to another person, the user may instantaneously check for financial damage and thus rapidly respond against such financial damage.

However, in general, since financial service providers are configured to send notification messages in the form of mobile text messages by setting pre-registered phone numbers of users as destination numbers, a lot of charges should be paid for the messages to mobile carriers to provide the notification message service. As such, general notification message services are mostly operated to additionally charge users for the messages and thus the users are reluctant to subscribe to the notification message services.

In this regard, as smartphone or tablet personal computers (PCs) are currently popular, a free message service using the Internet instead of mobile text messages is coming into widespread use.

In the free message service using the Internet, when a certain application for the message service is installed in user devices, the application is driven to exchange messages among users registered as friends.

This message service does not use text message services of mobile carriers as described above but enables the exchange of messages on the Internet among devices in which the same application is installed. Thus, except for data communication charges, the users are not additionally charged for the messages.

Accordingly, to provide a notification message service for preventing financial fraud, research on a technology capable of providing a notification message service to users free of charge by using a currently widely used Internet-based message service is necessary.

Furthermore, since a user may not actually read a notification message when the notification message is sent to the user by using the Internet-based message service, research on a technology capable of successfully providing a notification message to a user by re-sending the notification message in the form of a mobile text message if the user does not read the notification message is necessary.

### DETAILED DESCRIPTION OF THE INVENTION

### TECHNICAL PROBLEM

The present invention provides an apparatus and method capable of providing a notification message service for preventing financial fraud, to a user free of charge by using a currently widely used Internet-based message service.

The present invention also provides a technology capable of successfully providing a notification message to a user by re-sending the notification message in the form of a mobile text message if the user does not read the notification message sent to the user by using an Internet-based message service.

### TECHNICAL SOLUTION

According to an aspect of an embodiment, an Internet-message-based notification service providing apparatus includes a user database in which identification information of multiple users is mapped to phone numbers of the multiple users, a memory having message storage areas for storing different messages in accordance with the identification information of the multiple users, an information receiver configured to receive, from a content providing server, a notification message transmission request together with a notification message and identification information of a recipient who is supposed to receive the notification message, a notification message storage configured to store the notification message in a first message storage area of the memory, corresponding to the identification information of the recipient, in response to the notification message transmission request, a determinator configured to determine whether a read receipt signal for the notification message is received from a recipient device within a predetermined period from a first timing at which the notification message is downloaded, if the notification message stored in the first message storage area is downloaded to the recipient device, and an alternative message sender configured to extract, from the user database, a first phone number mapped to the identification information of the recipient, and then send the notification message in a form of a mobile text message by setting the first phone number as a destination number, if the read receipt signal for the notification message is not received from the recipient device within the predetermined period from the first timing.

According to another aspect of an embodiment, an operating method of an Internet-message-based notification service providing apparatus includes maintaining a user database in which identification information of multiple users is mapped to phone numbers of the multiple users, maintaining a memory having message storage areas for storing different messages in accordance with the identification information of the multiple users, receiving, from a content providing server, a notification message transmission request together with a notification message and identification information of a recipient who is supposed to receive the notification message, storing the notification message in a first message storage area of the memory, corresponding to the identification information of the recipient, in response to the notification message transmission request, determining whether a read receipt signal for the notification message is received from a recipient device within a predetermined period from a first timing at which the notification message is downloaded, if the notification message stored in the first message storage area is downloaded to the recipient device, and extracting, from the user database, a first phone number mapped to the identification information of the recipient and then sending the notification message in a form of a mobile text message by setting the first phone number as a destination number, if the read receipt signal for the notification message is not received from the recipient device within the predetermined period from the first timing.

### ADVANTAGEOUS EFFECTS OF THE INVENTION

The present invention may provide an apparatus and method capable of providing a notification message service for preventing financial fraud, to a user free of charge by using a currently widely used Internet-based message service.

The present invention may also provide a technology capable of successfully providing a notification message to a user by re-sending the notification message in the form of a mobile text message if the user does not read the notification message sent to the user by using an Internet-based message service.

### DESCRIPTION OF THE DRAWINGS

FIG. 1 is a block diagram of an Internet-message-based notification service providing apparatus according to an embodiment of the present invention; and
FIG. 2 is a flowchart of an operating method of an Internet-message-based notification service providing apparatus, according to an embodiment of the present invention.

### MODE OF THE INVENTION

Reference will now be made in detail to embodiments of the present invention, examples of which are illustrated in the accompanying drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, like reference numerals denote like elements.

It will be understood that when an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

The terminology used herein is for the purpose of describing particular embodiments and is not intended to limit the invention. As used herein, the singular forms "a", "an", and "the" are intended to include the plural forms as well, unless the context clearly indicates otherwise. It will be further understood that the terms "comprises", "comprising", "includes" and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail by explaining embodiments of the invention with reference to the attached drawings.

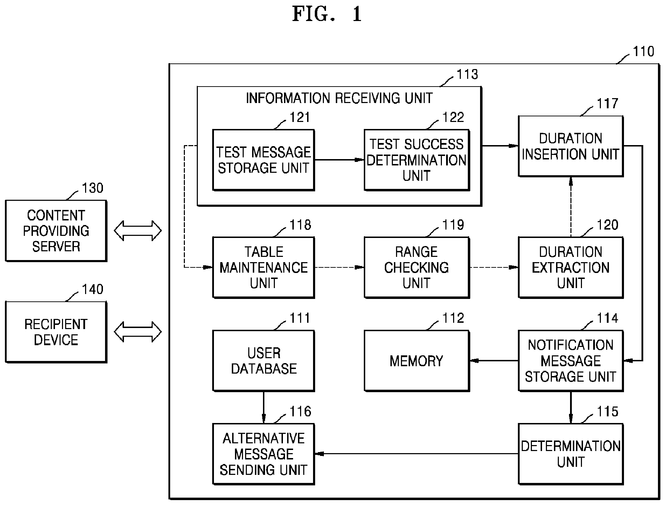

FIG. 1 is a block diagram of an Internet-message-based notification service providing apparatus 110 according to an embodiment of the present invention.

Referring to FIG. 1, the Internet-message-based notification service providing apparatus 110 according to an embodiment of the present invention includes a user database 111, a memory 112, an information receiver 113, a notification message storage 114, a determinator 115, and an alternative message sender 116.

In the user database 111, identification information of multiple users is mapped to phone numbers of the multiple users.

Herein, the identification information of the multiple users refers to unique identification information assigned to the users to identify the users, and may generally include an identifier (ID) created by each user to subscribe to a service.

The memory 112 has message storage areas for storing different messages in accordance with the identification information of the multiple users.

For example, if a user does an account transfer or makes a payment with a credit card and the Internet-message-based notification service providing apparatus 110 receives a notification message transmission request about the account transfer or the payment with the credit card from a content providing server 130 operated by a bank or a credit card company, the information receiver 113 receives, from the content providing server 130, the notification message transmission request together with a notification message and identification information of a recipient who is supposed to receive the notification message.

At this time, the notification message storage 114 stores the notification message in a first message storage area of the memory 112, corresponding to the identification information of the recipient, in response to the notification message transmission request.

In this case, a recipient device 140 may be connected to the Internet-message-based notification service providing apparatus 110 in a predetermined cycle and then may access the first message storage area of the memory 112, corresponding to the identification information of the recipient, and decide whether a new message is stored in the first message storage area.

If the notification message is stored in the first message storage area, the recipient device 140 may download the notification message. If the recipient reads the notification message on the recipient device 140 after the notification message is downloaded, the recipient device 140 may generate a read receipt signal for the notification message and send the read receipt signal to the Internet-message-based notification service providing apparatus 110.

In this case, the determinator 115 may determine whether the read receipt signal for the notification message is received from the recipient device 140 within a predetermined period from a first timing at which the notification message is downloaded, if the notification message stored in the first message storage area is downloaded to the recipient device 140.

If the read receipt signal for the notification message is received from the recipient device 140 within the predetermined period from the first timing, this means that the recipient has properly read the notification message on the recipient device 140, and thus the Internet-message-based notification service providing apparatus 110 may send, through a read receipt reporting unit (not shown) to the content providing server 130, a receipt message indicating that the recipient has properly read the notification message.

Otherwise, if the read receipt signal for the notification message is not received from the recipient device 140 within the predetermined period from the first timing, the alternative message sender 116 may extract, from the user database 111, a first phone number mapped to the identification information of the recipient and then send the notification message in the form of a mobile text message by setting the first phone number as a destination number.

That is, although the recipient device 140 has downloaded the notification message by accessing the memory 112 in the predetermined cycle, if the recipient has not read the notification message, this means that desired information has not been successfully provided to the recipient, and thus the Internet-message-based notification service providing apparatus 110 may re-send, through the alternative message sender 116, the notification message in the form of a mobile text message by setting the first phone number, which is pre-registered for the recipient, as a destination number, thereby inducing the recipient to read the notification message.

In this case, according to an embodiment of the present invention, the information receiver 113 may include a test message storage 121 and a test success determinator 122.

The test message storage 121 generates a test message and stores the test message in the first message storage area when the notification message transmission request is received from the content providing server 130.

As the test message stored in the first message storage area is downloaded to the recipient device 140, the test success determinator 122 determines whether a download success message for the test message is received from the recipient device 140.

In this case, the notification message storage 114 may store the notification message in the first message storage area when the download success message for the test message is received from the recipient device 140.

That is, the Internet-message-based notification service providing apparatus 110 may store the notification message in the first message storage area after testing whether the recipient device 140 is capable of properly downloading the notification message, thereby resulting in the notification message being properly provided to the recipient.

According to an embodiment of the present invention, the Internet-message-based notification service providing apparatus 110 may further include a duration inserter 117.

The duration inserter 117 inserts information about a predetermined message reading duration into a data header of the notification message when the notification message is received from the content providing server 130.

Herein, the predetermined message reading duration is shorter than the predetermined period used to determine whether the read receipt signal for the notification message is properly received from the recipient device 140.

At this time, the notification message storage 114 may store the notification message in the first message storage area when the information about the predetermined message reading duration is inserted into the data header of the notification message.

In this case, the recipient device 140 may extract the information about the predetermined message reading duration from the data header of the notification message and then determine, based on the information about the predetermined message reading duration, whether the notification message is read on the recipient device 140 for longer than the predetermined message reading duration, when the notification message is downloaded and the recipient reads the notification message on the recipient device 140.

If the notification message is read on the recipient device 140 for longer than the predetermined message reading duration, the recipient device 140 may generate the read receipt signal for the notification message and send the read receipt signal to the Internet-message-based notification service providing apparatus 110.

For example, when the predetermined period used to determine whether the read receipt signal for the notification message is properly received from the recipient device 140 is "3 seconds" and the predetermined message reading duration is "2 seconds", which is shorter than the predetermined period, the duration inserter 117 may insert the information about the predetermined message reading duration (e.g., "2 seconds"), into the data header of the notification message.

Thereafter, if the notification message storage 114 stores the notification message in the first message storage area of the memory 112 and then the recipient device 140 accesses the first message storage area in the predetermined cycle and downloads the notification message, the recipient device 140 may extract, from the data header of the notification message, the information about the predetermined message reading duration (e.g., "2 seconds") and then determine whether the notification message is read on the recipient device 140 for longer than the predetermined message reading duration (e.g., "2 seconds"), when the recipient reads the notification message on the recipient device 140.

If the notification message is read on the recipient device 140 for longer than the predetermined message reading duration (e.g., "2 seconds"), the recipient device 140 may generate the read receipt signal for the notification message and send the read receipt signal to the Internet-message-based notification service providing apparatus 110.

In this case, since the read receipt signal for the notification message is received within the predetermined period (e.g., "3 seconds"), the Internet-message-based notification service providing apparatus 110 may send, through the read receipt reporting unit to the content providing server 130, the receipt message indicating that the recipient has properly read the notification message.

According to another embodiment of the present invention, the Internet-message-based notification service providing apparatus 110 may further include a table maintenance unit 118, a range checking unit 119, and a duration extractor 120.

The table maintenance unit 118 stores and maintains a table in which different message reading durations, which are shorter than the predetermined period, are mapped to multiple predetermined data size ranges.

For example, when the predetermined period is assumed to be "5 seconds", the table may include Table 1 shown below.

**[Table 1]**

| Predetermined data size range | Message reading duration |
|---|---|
| 1 byte to 20 bytes | 1 seconds |
| 20 bytes to 50 bytes | 2 seconds |
| 50 bytes to 100 bytes | 3 seconds |
| ... | ... |

The range checking unit 119 checks a data size of the notification message and then decides a first data size range, to which the data size of the notification message belongs, among the multiple predetermined data size ranges with reference to the table, when the notification message is received from the content providing server 130.

The duration extractor 120 extracts, from the table, a first message reading duration mapped to the first data size range.

At this time, the duration inserter 117 inserts information about the first message reading duration into the data header of the notification message.

In this case, the notification message storage 114 may store the notification message in the first message storage area when the information about the first message reading duration is inserted into the data header of the notification message.

The recipient device 140 may extract the information about the first message reading duration from the data header of the notification message and then determine, based on the information about the first message reading duration, whether the notification message is read on the recipient device 140 for longer than the first message reading duration, when the notification message is downloaded and the recipient reads the notification message on the recipient device 140.

If the notification message is read on the recipient device 140 for longer than the first message reading duration, the recipient device 140 may generate the read receipt signal for the notification message and send the read receipt signal to the Internet-message-based notification service providing apparatus 110.

For example, when the predetermined period is "5 seconds", the table includes Table 1, and the notification message received from the content providing server 130 has a data size of "60 bytes", the range checking unit 119 may decide the first data size range (e.g., "50 bytes to 100 bytes"), to which the data size of the notification message belongs, among the multiple predetermined data size ranges with reference to Table 1.

In this case, the duration extractor 120 may extract, from the table, the first message reading duration (e.g., "3 seconds") mapped to the first data size range.

Then, the duration inserter 117 may insert the information about the first message reading duration (e.g., "3 seconds") into the data header of the notification message.

Thereafter, if the notification message storage 114 stores the notification message in the first message storage area of the memory 112 and then the recipient device 140 downloads the notification message by accessing the first message storage area in the predetermined cycle, the recipient device 140 may extract the information about the first message reading duration (e.g., "3 seconds") from the data header of the notification message and then determine whether the notification message is read on the recipient device 140 for longer than the first message reading duration (e.g., "3 seconds"), when the recipient reads the notification message on the recipient device 140.

If the notification message is read on the recipient device 140 for longer than the predetermined message reading duration (e.g., "3 seconds"), the recipient device 140 may generate the read receipt signal for the notification message and send the read receipt signal to the Internet-message-based notification service providing apparatus 110.

In this case, since the read receipt signal for the notification message is received within the predetermined period (e.g., "5 seconds"), the Internet-message-based notification service providing apparatus 110 may send, through the read receipt reporting unit to the content providing server 130, the receipt message indicating that the recipient has properly read the notification message.

Eventually, although the recipient device 140 downloads the notification message and then the recipient properly opens the notification message on the recipient device 140, if the recipient closes the notification message immediately after the notification message is opened, desired information may not be successfully provided to the recipient via the notification message. As such, the Internet-message-based notification service providing apparatus 110 according to the present invention may determine that the notification message is successfully provided to the recipient, only if the recipient reads the notification message on the recipient device 140 for a certain duration. If the notification message is not read on the recipient device 140 for the certain duration, this means that the notification message is not successfully provided to the recipient, and thus the Internet-message-based notification service providing apparatus 110 may re-send the notification message to the recipient in the form of a mobile text message, thereby successfully providing the notification message to the recipient.

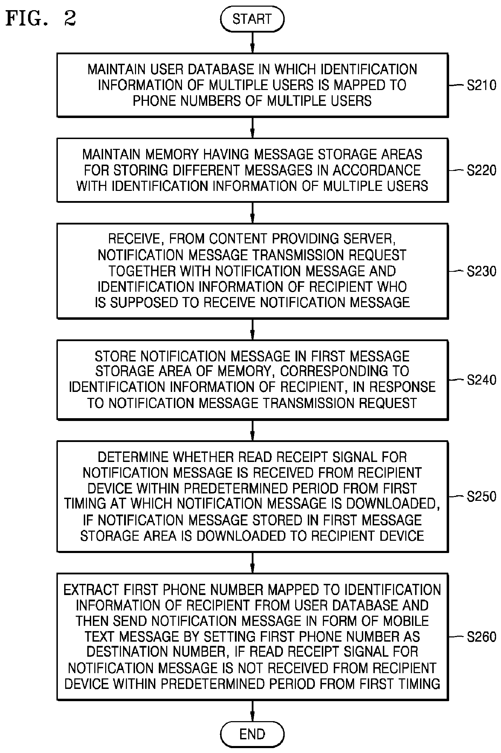

FIG. 2 is a flowchart of an operating method of an Internet-message-based notification service providing apparatus, according to an embodiment of the present invention.

In operation S210, a user database in which identification information of multiple users is mapped to phone numbers of the multiple users is maintained.

In operation S220, a memory having message storage areas for storing different messages in accordance with the identification information of the multiple users is maintained.

In operation S230, a notification message transmission request is received from a content providing server together with a notification message and identification information of a recipient who is supposed to receive the notification message.

In operation S240, the notification message is stored in a first message storage area of the memory, corresponding to the identification information of the recipient, in response to the notification message transmission request.

In operation S250, it is determined whether a read receipt signal for the notification message is received from the recipient device within a predetermined period from a first timing at which the notification message is downloaded, if the notification message stored in the first message storage area is downloaded to a recipient device.

In operation S260, a first phone number mapped to the identification information of the recipient is extracted from the user database and then the notification message is sent in the form of a mobile text message by setting the first phone number as a destination number, if the read receipt signal for the notification message is not received from the recipient device within the predetermined period from the first timing.

In this case, according to an embodiment of the present invention, the recipient device may download the notification message by being connected to the Internet-message-based notification service providing apparatus in a predetermined cycle and then accessing the first message storage area of the memory, corresponding to the identification information of the recipient, and deciding whether a new message is stored in the first message storage area, and may generate the read receipt signal for the notification message and send the read receipt signal to the Internet-message-based notification service providing apparatus when the recipient reads the notification message on the recipient device after the notification message is downloaded.

Furthermore, according to an embodiment of the present invention, the operating method of the Internet-message-based notification service providing apparatus may further include, before operation S240, inserting information about a predetermined message reading duration, which is shorter than the predetermined period, into a data header of the notification message when the notification message is received from the content providing server.

At this time, in operation S240, the notification message may be stored in the first message storage area when the information about the predetermined message reading duration is inserted into the data header of the notification message.

In this case, the recipient device may extract the information about the predetermined message reading duration from the data header of the notification message when the notification message is downloaded and the recipient reads the notification message on the recipient device, and then may generate the read receipt signal for the notification message and send the read receipt signal to the Internet-message-based notification service providing apparatus when it is determined, based on the information about the predetermined message reading duration, that the notification message is read on the recipient device for longer than the predetermined message reading duration.

Furthermore, according to another embodiment of the present invention, the operating method of the Internet-message-based notification service providing apparatus may further include, before operation S240, storing and maintaining a table in which different message reading durations, which are shorter than the predetermined period, are mapped to multiple predetermined data size ranges, checking a data size of the notification message when the notification message is received from the content providing server and then deciding a first data size range, to which the data size of the notification message belongs, among the multiple predetermined data size ranges with reference to the table, extracting, from the table, a first message reading duration mapped to the first data size range, and inserting information about the first message reading duration into the data header of the notification message.

At this time, in operation S240, the notification message may be stored in the first message storage area when the information about the first message reading duration is inserted into the data header of the notification message.

In this case, the recipient device may extract the information about the first message reading duration from the data header of the notification message when the notification message is downloaded and the recipient reads the notification message on the recipient device, and then generate the read receipt signal for the notification message and send the read receipt signal to the Internet-message-based notification service providing apparatus when it is determined, based on the information about the first message reading duration, that the notification message is read on the recipient device for longer than the first message reading duration.

Furthermore, according to an embodiment of the present invention, the operating method of the Internet-message-based notification service providing apparatus may further include, before operation S240, generating a test message and storing the test message in the first message storage area when the notification message transmission request is received from the content providing server, and determining whether a download success message for the test message is received from the recipient device as the test message stored in the first message storage area is downloaded to the recipient device.

At this time, in operation S240, the notification message may be stored in the first message storage area when the download success message for the test message is received from the recipient device.

The operating method of the Internet-message-based notification service providing apparatus, according to an embodiment of the present invention, has been described above in relation to FIG. 2. Herein, the operating method of the Internet-message-based notification service providing apparatus, according to an embodiment of the present invention, may correspond to the operation of the Internet-message-based notification service providing apparatus 110 described above in relation to FIG. 1, and a detailed description thereof will not be provided herein.

The operating method of the Internet-message-based notification service providing apparatus, according to an embodiment of the present invention, can be implemented as a computer program stored in a recording medium to execute the operating method in connection with a computer.

Furthermore, the operating method of the Internet-message-based notification service providing apparatus, according to an embodiment of the present invention, can be implemented in the form of program instructions that can be executed through various computer components and recorded on a computer-readable recording medium. The computer-readable recording medium may include program instructions, data files, data structures, or a combination thereof. The program instructions recorded on the computer-readable recording medium may be program instructions specially designed and configured for the present invention or program instructions known to and usable by one of ordinary skill in the art of computer software. Examples of the computer-readable recording medium include magnetic media (e.g., a hard disk, a floppy disk, and a magnetic tape), optical recording media (e.g., a CD-ROM and a DVD), magnetooptical media (e.g., a floptical disk), and hardware devices specially configured to store and execute program instructions (e.g., a ROM, a RAM, and a flash memory). Examples of the program instructions include machine code generated by a compiler and high-level language code that can be executed by a computer using an interpreter or the like. The hardware devices may be configured to operate as one or more software modules in order to perform operations of the present invention, and vice versa.

While the present invention has been particularly shown and described with reference to embodiments thereof, it will be understood by one of ordinary skill in the art that various changes in form and details may be made therein without departing from the spirit and scope of the invention as defined by the following claims.

Therefore, the scope of the invention is defined not by the detailed description of the invention but by the following claims and their equivalents.

## Claims

1. An Internet-message-based notification service providing apparatus comprising:
a user database in which identification information of multiple users is mapped to phone numbers of the multiple users;
a memory having message storage areas for storing different messages in accordance with the identification information of the multiple users;
an information receiver configured to receive, from a content providing server, a notification message transmission request together with a notification message and identification information of a recipient who is supposed to receive the notification message;
a notification message storage configured to store the notification message in a first message storage area of the memory, corresponding to the identification information of the recipient, in response to the notification message transmission request;
a determinator configured to determine whether a read receipt signal for the notification message is received from a recipient device within a predetermined period from a first timing at which the notification message is downloaded, if the notification message stored in the first message storage area is downloaded to the recipient device; and
an alternative message sender configured to extract, from the user database, a first phone number mapped to the identification information of the recipient, and then send the notification message in a form of a mobile text message by setting the first phone number as a destination number, if the read receipt signal for the notification message is not received from the recipient device within the predetermined period from the first timing.

2. The Internet-message-based notification service providing apparatus of claim 1, wherein the recipient device downloads the notification message by being connected to the Internet-message-based notification service providing apparatus in a predetermined cycle and then accessing the first message storage area of the memory, corresponding to the identification information of the recipient, and deciding whether a new message is stored in the first message storage area, and generates the read receipt signal for the notification message and sends the read receipt signal to the Internet-message-based notification service providing apparatus when the recipient reads the notification message on the recipient device after the notification message is downloaded.

3. The Internet-message-based notification service providing apparatus of claim 1, further comprising a duration inserter configured to insert information about a predetermined message reading duration, which is shorter than the predetermined period, into a data header of the notification message when the notification message is received from the content providing server,
wherein the notification message storage stores the notification message in the first message storage area when the information about the predetermined message reading duration is inserted into the data header of the notification message, and
wherein the recipient device extracts the information about the predetermined message reading duration from the data header of the notification message when the notification message is downloaded and the recipient reads the notification message on the recipient device, and then generates the read receipt signal for the notification message and sends the read receipt signal to the Internet-message-based notification service providing apparatus when it is determined, based on the information about the predetermined message reading duration, that the notification message is read on the recipient device for longer than the predetermined message reading duration.

4. The Internet-message-based notification service providing apparatus of claim 1, further comprising:
a table maintenance unit configured to store and maintain a table in which different message reading durations, which are shorter than the predetermined period, are mapped to multiple predetermined data size ranges;
a range checking unit configured to check a data size of the notification message when the notification message is received from the content providing server and then decide a first data size range, to which the data size of the notification message belongs, among the multiple predetermined data size ranges with reference to the table;
a duration extractor configured to extract, from the table, a first message reading duration mapped to the first data size range; and
a duration inserter configured to insert information about the first message reading duration into a data header of the notification message,
wherein the notification message storage stores the notification message in the first message storage area when the information about the first message reading duration is inserted into the data header of the notification message, and
wherein the recipient device extracts the information about the first message reading duration from the data header of the notification message when the notification message is downloaded and the recipient reads the notification message on the recipient device, and then generates the read receipt signal for the notification message and sends the read receipt signal to the Internet-message-based notification service providing apparatus when it is determined, based on the information about the first message reading duration, that the notification message is read on the recipient device for longer than the first message reading duration.

5. The Internet-message-based notification service providing apparatus of claim 1, further comprising:
a test message storage configured to generate a test message and store the test message in the first message storage area when the notification message transmission request is received from the content providing server; and
a test success determinator configured to determine whether a download success message for the test message is received from the recipient device as the test message stored in the first message storage area is downloaded to the recipient device,
wherein the notification message storage stores the notification message in the first message storage area when the download success message for the test message is received from the recipient device.

6. An operating method of an Internet-message-based notification service providing apparatus, the operating method comprising:
maintaining a user database in which identification information of multiple users is mapped to phone numbers of the multiple users;
maintaining a memory having message storage areas for storing different messages in accordance with the identification information of the multiple users;
receiving, from a content providing server, a notification message transmission request together with a notification message and identification information of a recipient who is supposed to receive the notification message;
storing the notification message in a first message storage area of the memory, corresponding to the identification information of the recipient, in response to the notification message transmission request;
determining whether a read receipt signal for the notification message is received from a recipient device within a predetermined period from a first timing at which the notification message is downloaded, if the notification message stored in the first message storage area is downloaded to the recipient device; and
extracting, from the user database, a first phone number mapped to the identification information of the recipient and then sending the notification message in a form of a mobile text message by setting the first phone number as a destination number, if the read receipt signal for the notification message is not received from the recipient device within the predetermined period from the first timing.

7. The operating method of claim 6, wherein the recipient device downloads the notification message by being connected to the Internet-message-based notification service providing apparatus in a predetermined cycle and then accessing the first message storage area of the memory, corresponding to the identification information of the recipient, and deciding whether a new message is stored in the first message storage area, and generates the read receipt signal for the notification message and sends the read receipt signal to the Internet-message-based notification service providing apparatus when the recipient reads the notification message on the recipient device after the notification message is downloaded.

8. The operating method of claim 6, further comprising inserting information about a predetermined message reading duration, which is shorter than the predetermined period, into a data header of the notification message when the notification message is received from the content providing server,
wherein the storing of the notification message comprises storing the notification message in the first message storage area when the information about the predetermined message reading duration is inserted into the data header of the notification message, and
wherein the recipient device extracts the information about the predetermined message reading duration from the data header of the notification message when the notification message is downloaded and the recipient reads the notification message on the recipient device, and then generates the read receipt signal for the notification message and sends the read receipt signal to the Internet-message-based notification service providing apparatus when it is determined, based on the information about the predetermined message reading duration, that the notification message is read on the recipient device for longer than the predetermined message reading duration.

9. The operating method of claim 6, further comprising:
storing and maintaining a table in which different message reading durations, which are shorter than the predetermined period, are mapped to multiple predetermined data size ranges;
checking a data size of the notification message when the notification message is received from the content providing server and then deciding a first data size range, to which the data size of the notification message belongs, among the multiple predetermined data size ranges with reference to the table;
extracting, from the table, a first message reading duration mapped to the first data size range; and
inserting information about the first message reading duration into a data header of the notification message,
wherein the storing of the notification message comprises storing the notification message in the first message storage area when the information about the first message reading duration is inserted into the data header of the notification message, and
wherein the recipient device extracts the information about the first message reading duration from the data header of the notification message when the notification message is downloaded and the recipient reads the notification message on the recipient device, and then generates the read receipt signal for the notification message and sends the read receipt signal to the Internet-message-based notification service providing apparatus when it is determined, based on the information about the first message reading duration, that the notification message is read on the recipient device for longer than the first message reading duration.

10. The operating method of claim 6, further comprising:
generating a test message and storing the test message in the first message storage area when the notification message transmission request is received from the content providing server; and
determining whether a download success message for the test message is received from the recipient device as the test message stored in the first message storage area is downloaded to the recipient device,
wherein the storing of the notification message comprises storing the notification message in the first message storage area when the download success message for the test message is received from the recipient device.

11. A computer-readable recording medium having recorded thereon a computer program for executing the operating method of any one of claims 6 to 10.

12. A computer program stored in a recording medium to execute the operating method of any one of claims 6 to 10 in connection with a computer.
